# EUROPÄISCHE PATENTSCHRIFT

(11) **EP 0 898 893 B1**
(45) Veröffentlichungstag und Bekanntmachung des Hinweises auf die Patenterteilung: **18.12.2002**
(21) Anmeldenummer: 98115267.1
(22) Anmeldetag: 13.08.1998
(51) Int. Cl.: A22C 11/08, F04C 11/00

(54) **Vorrichtung zum Abfüllen von Wurstbrät**
Device for stuffing sausage meat
Dispositif à bourrer de la chair à saucisses

(30) Priorität: 29.08.1997 DE 19737804
(43) Veröffentlichungstag der Anmeldung: 03.03.1999
(73) Patentinhaber: Heinrich Frey Maschinenbau GmbH, 89542 Herbrechtingen-Bolheim (DE)
(72) Erfinder: Frey, Albert, 89542 Herbrechtingen (DE)
(74) Vertreter: Schmidt, Christian, Dipl.-Phys.

(56) Entgegenhaltungen:
- EP-A- 0 061 995
- EP-A- 0 170 039
- WO-A-98/22206
- US-A- 2 038 247

## Beschreibung

Die Erfindung betrifft eine Vorrichtung zum portionierenden oder kontinuierlichen Abfüllen von pastösen Produkten, insbesondere zum Abfüllen von Wurstbrät in Natur- oder Kunstdärme, mit einer über einen Trichter beschickbaren Fördervorrichtung und zumindest mit der Fördervorrichtung verbundenen Füllstationen. Eine derartige Vorrichtung ist aus US-A-2 038 247 bekannt.

Zur Erhöhung der Leistungsfähigkeit von Vorrichtungen der eingangs angegebenen Art ist es bekannt, eine entsprechend den Leistungsanforderungen dimensionierte, zentrale Fülleinheit mit entsprechender Fördervorrichtung zu verwenden, wobei von der zentralen Fülleinheit mehrere Füllrohre zu einzelnen Füllstationen führen. Eine derartige Anordnung führt jedoch zu dem in der Praxis sehr wesentlichen Nachteil, daß aufgrund der erforderlichen Leitungslängen zu den einzelnen Füllstationen die aus der Wandreibung resultierende Verschmierungsgefahr groß ist. Besonders bei steifem Brät kann dies eine sehr störende Produktbeeinträchtigung zur Folge haben.

Aufgabe der Erfindung ist es, eine Vorrichtung der eingangs angeführten Art zu schaffen, die auch bei steifem Brät das Auftreten von Verschmierungseffekten weitestgehend vermeidet und sich durch kompakten und wirtschaftlichen Aufbau auszeichnet.

Gelöst wird diese Aufgabe nach der Erfindung im wesentlichen dadurch, daß die Fördervorrichtung aus zumindest zwei vorzugsweise unabhängig voneinander bedienbaren, individuellen, im gleichen Maschinengehäuse angeordneten Förderwerken besteht, die über den ihnen gemeinsam zugeordneten Trichter gespeist sind und von denen jeweils ein Füllrohr oder Füllkanal zu einer dem jeweiligen Förderwerk unmittelbar benachbarten Füllstation führt.

Durch die Verwendung eines beiden Förderwerken gemeinsamen Fülltrichters wird neben Bedienungsvorteilen auch ein sehr kompakter und kostengünstiger Aufbau der Vorrichtung erreicht, und durch die Verwendung eines Förderwerkes pro zur jeweiligen Füllstation führendem Füllkanal kann eine Füllqualität entsprechend den bekannten Vorrichtungen mit nur einer einzigen Füllstation gewährleistet werden. Die sonst bei Vorrichtungen mit mehreren Füllstationen vorhandenen Nachteile, insbesondere hinsichtlich der Verschmierungsgefahren und der erforderlichen aufwendigen Reinigungsvorgänge, können vermieden werden.

Obwohl als Förderwerke prinzipiell alle Arten herkömmlicher Förderwerke, wie insbesondere Schraubenpumpen, Außenzahnradpumpen und dergleichen verwendbar sind, werden bevorzugt als Förderwerke zwei spiegelsymmetrisch angeordnete Flügelzellenförderwerke vorgesehen, deren Füllungsräume aneinandergrenzend unterhalb des Trichterauslasses angeordnet sind. Durch entsprechende Füllung des Trichters und Sicherstellung einer vollvolumigen Beschickung kann ein gleichmäßiger Transport des Bräts zu den Füllungsräumen gewährleistet werden, und dies hat dann wiederum zur Folge, daß die beiden Flügelzellenförderwerke gleichmäßig und korrekt wie im Falle eines Einzelbetriebs eines Flügelzellenförderwerks arbeiten.

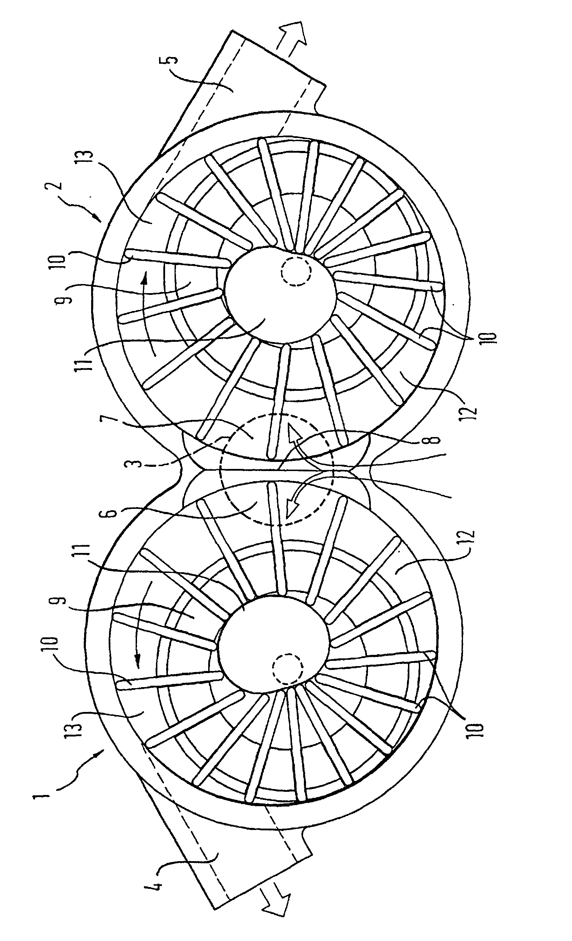

Weitere vorteilhafte Ausgestaltungen der Erfindung sind in den Unteransprüchen angegeben und werden in der nachfolgenden Beschreibung eines Ausführungsbeispiels unter Bezugnahme auf die Zeichnung erläutert.

Die einzige Figur der Zeichnung zeigt eine schematische Draufsicht auf eine erfindungsgemäße Zwillingsanordnung von Flügelzellenförderwerken, die über einen gemeinsamen Fülltrichter gespeist werden.

Bei den Flügelzellenförderwerken 1, 2 handelt es sich um besonders brätschonende Förderwerke, die höchste Qualitätsansprüche hinsichtlich eines perfekten Füllbildes beim Anschnitt aller Wurstsorten erfüllen. Durch die Evakuierung des Füllgutes kann die Fettoxidation minimiert, der Eiweißabbau vermieden und der Keimgehalt reduziert werden, und dies ist der Grund dafür, daß im Rahmen der Erfindung bevorzugt derartige Fördervorrichtungen Verwendung finden. Die Flügelzellenförderwerke 1 werden über herkömmliche Antriebe und insbesondere direkt über Servomotoren, Ölmotoren und dergleichen angetrieben, wobei für beide Förderwerke ein gemeinsamer Antrieb und ein entsprechendes Zwischengetriebe vorgesehen sein kann.

Die beiden Förderwerke 1, 2 sind zueinander spiegelsymmetrisch angeordnet, so daß ihre Füllungsräume 6, 7, die im Ausführungsbeispiel durch eine Wandung 8 voneinander getrennt sind, direkt nebeneinander gelegen sind. Der in der Zeichnung nur durch seinen Auslaß dargestellte, beiden Förderwerken 1, 2 gemeinsame Fülltrichter 3 ist bezüglich der Förderwerke 1, 2 mittig angeordnet und beschickt gleichzeitig beide Füllungsräume 6, 7, wie dies durch eine Pfeildarstellung symbolisiert ist.

Jedes Förderwerk 1, 2 umfaßt in bekannter Weise einen Rotor 9, im Rotor geführte Flügel 10 sowie eine Steuerkurve 11, und die beiden gegensinnig umlaufenden Förderwerke 1, 2 besitzen demgemäß vor den jeweiligen Füllungsräumen 6, 7 einen Vakuumbereich 12 und im Anschluß an die Füllungsräume 6, 7 einen Druckbereich 13, aus dem das in den Füllungsräumen 6, 7 übernommene Brät über kurze Füllkanäle 5, 6 der zugeordneten Füllstation zugeführt wird. Die Füllkanäle 4, 5 entsprechen in ihrer Gestaltung und auch in ihrer Länge und ihren Abmessungen den herkömmlichen Füllkanälen in Maschinen mit nur einer einzigen Füllstation, was gleichbedeutend damit ist, daß auch deren hohe Produktqualität bei der erfindungsgemäßen Vorrichtung gewährleistet werden kann, obwohl es sich um eine Vorrichtung mit mehreren Füllstationen handelt.

Die Füllungsräume 6, 7 der beiden Flügelzellenwerke müssen nicht notwendigerweise symmetrisch zueinander liegen, sondern sie können auch gegeneinander versetzt, insbesondere auch einstellbar gegeneinander versetzt angeordnet werden, um in Abhängigkeit von bestimmten Produkten die gleichmäßige Befüllung zu fördern.

Nach weiteren Ausführungsvarianten der Erfindung kann sich die Trennwandung zwischen den Füllungsräumen auch in vorgebbarer Weise in den Trichterauslaß, d.h. in den unteren Bereich des Trichterraums erstrecken, aber dies stellt keine Notwendigkeit dar und es ist sogar möglich, im Zusammenhang mit dem Abfüllen entsprechend geeigneter Produkte auf die Trennwand zwischen den beiden Füllräumen vollständig zu verzichten.

### Bezugszeichenliste

- 1: Förderwerk
- 2: Förderwerk
- 3: Trichter
- 4: Füllkanal
- 5: Füllkanal
- 6: Füllungsraum
- 7: Füllungsraum
- 8: Wandung
- 9: Rotor
- 10: Flügel
- 11: Steuerkurve
- 12: Vakuumbereich
- 13: Druckbereich

## Patentansprüche

1. Vorrichtung zum portionierenden oder kontinuierlichen Abfüllen von pastösen Produkten, insbesondere zum Abfüllen von Wurstbrät in Natur- oder Kunstdärme,
mit einer über einen Trichter beschickbaren Fördervorrichtung und zumindest zwei mit der Fördervorrichtung verbundenen Füllstationen,
**dadurch gekennzeichnet,**
**daß** die Fördervorrichtung aus zumindest zwei unabhängig voneinander bedienbaren, individuellen, im gleichen Maschinengehäuse angeordneten Förderwerken (1, 2) besteht, die über den ihnen gemeinsam zugeordneten Trichter (3) gespeist sind und von denen jeweils ein Füllrohr oder Füllkanal (4, 5) zu einer dem jeweiligen Förderwerk (1, 2) unmittelbar benachbarten Füllstation führt.

2. Vorrichtung nach Anspruch 1,
**dadurch gekennzeichnet,**
**daß** als Förderwerke (1, 2) zwei spiegelsymmetrisch angeordnete Flügelzellenförderwerke vorgesehen sind, deren Füllungsräume (6, 7) aneinandergrenzend unterhalb des Trichterauslasses angeordnet sind.

3. Vorrichtung nach Anspruch 2,
**dadurch gekennzeichnet,**
**daß** die Füllungsräume (6, 7) der beiden Flügelzellenförderwerke (1, 2) durch eine Wandung (8) getrennt sind.

4. Vorrichtung nach Anspruch 2,
**dadurch gekennzeichnet,**
**daß** für die beiden Flügelzellenförderwerke (1, 2) ein gemeinsamer Füllungsraum vorgesehen ist.

5. Vorrichtung nach einem der Ansprüche 1 bis 3,
**dadurch gekennzeichnet,**
**daß** die Füllungsräume (6, 7) der beiden Flügelzellenförderwerke (1, 2) in Umlaufrichtung der Flügelzellenförderwerke gegeneinander versetzt sind.

6. Vorrichtung nach Anspruch 5,
**dadurch gekennzeichnet,**
**daß** die Versetzung der Füllungsräume (6, 7) einstellbar ist.

7. Vorrichtung nach einem der vorhergehenden Ansprüche,
**dadurch gekennzeichnet,**
**daß** sich die Trennwandung (8) zwischen den Füllungsräumen (6, 7) in den Trichterauslaß erstreckt.

8. Vorrichtung nach einem der vorhergehenden Ansprüche,
**dadurch gekennzeichnet,**
**daß** die beiden Förderwerke (1, 2) synchron und vorzugsweise über einen gemeinsamen Motor angetrieben sind.

9. Vorrichtung nach einem der Ansprüche 1 bis 7,
**dadurch gekennzeichnet,**
**daß** die beiden Förderwerke (1, 2) separat angetrieben sind.

## Claims

1. Apparatus for the portioning or continuous filling of pasty products, in particular for the filling of sausage meat into natural or artificial skins, comprising a conveying apparatus which can be charged via a funnel and at least two filling stations connected to the conveying apparatus, **characterized in that** the conveying apparatus comprises at least two individual conveying mechanisms (1, 2) arranged in the same machine housing, which can be operated independently of one another and which are fed via the funnel (3) which is jointly associated with them and from each of which a filling tube or filling passage (4, 5) leads to a filling station directly adjacent the respective conveying mechanism (1, 2).

2. Apparatus in accordance with claim 1, **characterized in that** two mirror-symmetrically arranged vane cell conveying mechanisms are provided as the conveying mechanisms (1,2), with the filling chambers (6, 7) of the vane cell conveying mechanisms being arranged bordering one another beneath the funnel outlet.

3. Apparatus in accordance with claim 2, **characterized in that** the filling chambers (6, 7) of the two vane cell conveying mechanisms (1, 2) are separated by a wall (8).

4. Apparatus in accordance with claim 2, **characterized in that** a common filling space is provided for both vane cell conveying mechanisms (1, 2).

5. Apparatus in accordance with any of claims 1 to 3, **characterized in that** the filling chambers (6, 7) of the two vane cell conveying mechanisms (1, 2) are offset relative to one another in the circumferential direction of the vane cell conveying mechanisms.

6. Apparatus in accordance with claim 5, **characterized in that** the offset of the filling chambers (6, 7) is adjustable.

7. Apparatus in accordance with any one of the preceding claims, **characterized in that** the partition wall (8) between the filling chambers (6, 7) extends into the funnel outlet.

8. Apparatus in accordance with any one of the preceding claims, **characterized in that** the two conveying mechanisms (1, 2) are synchronously driven and preferably driven by a common motor.

9. Apparatus in accordance with any of claims 1 to 7, **characterized in that** the two conveying mechanisms (1, 2) are separately driven.

## Revendications

1. Dispositif pour remplir des produits pâteux par portions ou en continu, en particulier pour remplir de la chair à saucisse dans des boyaux naturels ou artificiels,
comportant un dispositif de transport susceptible d'être chargé via un entonnoir et au moins deux stations de remplissage reliées au dispositif de transport,
**caractérisé en ce que** le dispositif de transport est constitué par au moins deux dispositifs d'avancement (1, 2) individuels qui peuvent être commandés indépendamment l'un de l'autre et agencés dans le même boîtier de machine, qui sont alimentés via l'entonnoir (3) qui leur est associé en commun et depuis lesquels un tube de remplissage ou un canal de remplissage (4, 5) respectif mène à une station de remplissage directement voisine du dispositif d'avancement (1, 2) respectif.

2. Dispositif selon la revendication 1, **caractérisé en ce qu'**à titre de dispositifs d'avancement (1, 2) sont prévus deux dispositifs d'avancement cellulaires à palettes, agencés de manière symétrique, dont les chambres de remplissage (6, 7) sont agencées adjacentes l'une de l'autre en-dessous de la sortie de l'entonnoir.

3. Dispositif selon la revendication 2, **caractérisé en ce que** les chambres de remplissage (6, 7) des deux dispositifs d'avancement cellulaires à palettes (1, 2) sont séparées par une cloison (8).

4. Dispositif selon la revendication 2, **caractérisé en ce qu'**il est prévu une chambre de remplissage commune pour les deux dispositifs d'avancement cellulaires à palettes.

5. Dispositif selon l'une des revendications 1 à 3, **caractérisé en ce que** les chambres de remplissage (6, 7) des deux dispositifs d'avancement cellulaires à palettes (1, 2) sont décalées l'une par rapport à l'autre en direction de rotation des dispositifs d'avancement cellulaires à palettes.

6. Dispositif selon la revendication 5, **caractérisé en ce que** le décalage des chambres de remplissage (6, 7) est réglable.

7. Dispositif selon l'une des revendications précédentes, **caractérisé en ce que** la cloison de séparation (8) entre les chambres de remplissage (6, 7) s'étend jusque dans la sortie de l'entonnoir.

8. Dispositif selon l'une des revendications précédentes, **caractérisé en ce que** les deux dispositifs d'avancement (1, 2) sont entraînés de manière synchrone et de préférence via un moteur commun.

9. Dispositif selon l'une des revendications 1 à 7, **caractérisé en ce que** les deux dispositifs d'avancement (1, 2) sont entraînés séparément.
